Europäisches Patentamt

European Patent Office

Office européen des brevets

(19)

(11) Publication number : 0 476 890 A2

## (12) EUROPEAN PATENT APPLICATION

(21) Application number : 91308138.6

(51) Int. Cl.⁵ : G01N 27/447

(22) Date of filing : 05.09.91

(30) Priority : 12.09.90 US 581608

(43) Date of publication of application :
25.03.92 Bulletin 92/13

(84) Designated Contracting States :
DE FR GB IT

(71) Applicant : BECKMAN INSTRUMENTS, INC.
2500 Harbor Boulevard Box 3100
Fullerton California 92634-3100 (US)

(72) Inventor : Dih, Jiunn-Jye
5300 Via Cartagena
Yorba Linda, California 92686 (US)

Inventor : Elvik, Ralph
3521 Mont Blanc Ct.
Carson City, Nevada 89705 (US)
Inventor : Fassett, John R.
11 Halstead Terrace
Irvine, California 92715 (US)
Inventor : Furst, Allen
151 Bridgeport Drive
Half Moon Bay, California 94019 (US)
Inventor : Moritz, Jeffrey R.
23906 Minnequa Drive
Diamond Bar, California 91765 (US)
Inventor : Sharples, Thomas D.
128 Heather Drive
Atherton, California 94027 (US)

(74) Representative : Ede, Eric et al
Fitzpatricks 4 West Regent Street
Glasgow G2 1RS (GB)

(54) Gel slab reinforcement and support.

(57)   Support and reinforcement of electrophoretic gel slabs (25 ; 44 ; 52 ; 74) are disclosed for improving their structural integrity to allow convenient and safe handling. The gel slab can be internally or externally supported, or both, by means of a frame (24 ; 42 ; 50 ; 72). A reinforcing screen (70, 73) can be used externally or internally to reinforce the gel slab. To complement the supported gel slab, a rinse tank (80) and a stain tank (100) are designed to accommodate the gel slab for efficient staining and rinsing operations.

FIG. 8

EP 0 476 890 A2

## BACKGROUND OF THE INVENTION

### 1. Field of the Invention

The present invention relates to electrophoretic separation, and more particularly to reinforcement and support of electrophoretic gel media.

### 2. Description of the Related Art

Electrophoresis is a technique by which particles such as mixtures of macromolecules are moved through a separation medium by an electric field. It is a widely used technique for quantitative analysis and for separation, recovery and purification of certain macromolecular species. It is widely used for the study of proteins, nucleic acids and chromosomes.

Electrophoresis can be carried out in a gel matrix (of gelatinous consistency) in a slab form. The gel media characteristically include agar, agarose, cellulose acetate and polyacrylamide. It involves the placing of a sample substance near one edge of the gel slab and subjecting the sample to an electric field having a component in the plane of the gel slab. The electric field causes the particles in the sample substance to migrate across the gel slab in the direction of the electric field. The amount of migration is determined by the length of time of exposure to the electric field, the electrical charges on the particles in the sample substance, the size of the particles and the magnitude of the imposed electric field. Particles with similar mobilities tend to group into discrete zones along the separation lanes and thus a determination can be made as to the relative sizes of each group of particles present in the sample. At the end of the separation process, zones of particles of different mobilities are aligned along the path of migration of the particles, i.e. separation lanes. Various visualization techniques, such as autoradiography or fluorescence photography can provide electrophoretograms containing information as to the relative proportions of each group of particles contained in the Sample substance. These electrophoretograms provide useful information such as blood serum composition which may be used by clinical pathologists or the like.

U.S. Patent No. 4,740,283 to Laas discloses a transverse alternating field gel electrophoretic apparatus in which a free-standing gel slab is supported vertically in a separation tank of electrolyte and an array of electrodes are positioned adjacent each surface of the gel slab. Two diagonal pairs of electrodes are energized in alternate sequence to provide fields diagonally across the thickness of the gel slab in alternating directions. The alternating fields are oriented at an angle (the "reorientation angle") with respect to each other and cause the molecules to proceed down the separation lanes in the gel in a generally sawtooth manner oscillating well within the thickness thereof. The electrolyte in the separation tank may be recirculated and cooled by a pump with a heat exchanger.

The above setup has been practiced by Beckman Instruments, Inc. in their GeneLine™ electrophoresis system. The system is designed to use gel slabs of about 7.6 cm wide by 10 cm tall by 0.64 cm thick. The gel is loaded vertically into a tank filled with electrolyte. The opposing side walls of the tank has vertical channels in which the vertical edges of the gel slab are loaded and supported. The loading operation often involves a rather inelegant procedure of partially immersing at least one gloved hand and frequently both hands to support the gel slab while loading it into the electrolyte bath. Labwares such as spatulas are sometimes used to handle the gel slab but it is still quite tricky to do so. Subsequent to separation, the gel slab is unloaded carefully and rinsed in a basin to remove residual electrolyte on the gel slab. The gel slab is then prepared for visualization of the separated components. For example, the gel slab may be transferred to another basin containing a staining solution for staining the separated components in the gel for fluorescence detection. This is followed by rinsing off the excess staining solution on the gel slab.

The gel slab electrophoretic process in the past has several deficiencies. One can appreciate the delicacy of manipulating the gel slab throughout the above operations. The gel slab being of a weak structure can tear under its own weight. The handling of the gel slab as it is being immersed into the electrolyte, rinsed or stained can be rather clumsy.

Moreover, the processes in the past have limited throughput. Since it may take several days to electrophoretically separate a sample in a gel matrix, it would be desirable to process a large number of samples simultaneously using one gel slab. This will necessarily require a wider gel slab for accommodating a larger number of samples and separation lanes. However, with an increase in planar area of the gel slab, it becomes increasingly more difficult to handle the gel. It has been found that the fragility of the gel is a serious limitation to the use of large gel slabs.

In addition, the gel slab must also withstand the turbulence of the recirculating electrolyte in the tank, otherwise the gel may be completely dislodged from its supporting channels in the side walls of the tank. This will ruin the entire run which can cause inconveniences especially when there is a limited supply of the sample available.

In the past, in order to increase the rigidity of the gel slab, a relatively high concentration of the gel medium is used, for example 1% agarose concentration. The high concentration of the gel medium poses more frictional resistance to the migration of the macromolecules through the gel matrix under the applied electric field. Simplistically, the higher the concentration of the gel medium, the denser is the gel matrix through which macromolecules must pass. It follows that a longer run time is required for separation and migration of larger particles is impeded to a greater extent when a denser gel matrix is used. The run time can be quite substantial for separation of large particles such as large DNA fragments.

SUMMARY OF THE INVENTION

The present invention is directed to reinforcement and support of the gel slab. The reinforcement and support improves the structural integrity of the flexible and fragile gel slab without compromising the separation performance of the gel matrix. Accordingly, a less dense gel matrix having a lower concentration of gel medium can be used for similar size gel slabs while maintaining sufficient rigidity for handling. This leads to reduction of run time for obtaining electrophoretic separation. Moreover, gel slabs having large planar areas can be formed that can be conveniently handled without fear of damage. The larger gel slab allows more samples to be run at the same time thereby increasing throughput. The supported gel slab can be handled safely and conveniently by manipulating the support.

In one aspect of the present invention, the gel slab is externally supported along the edge of the slab by a frame structure. In another aspect of the present invention, the gel slab is internally supported by a frame structure embedded in the slab. In a further aspect of the present invention, a combination of internal and external supports are implemented. In addition, the support may include a sheet of screen material placed against one or more surfaces of the gel slab or embedded in the gel slab to provide reinforcement.

In yet another aspect of the present invention, a rinse tank and a stain tank are designed for use with the supported gel slab. The gel slab can be conveniently positioned into the rinse tank and stain tank by handling the support.

BRIEF DESCRIPTION OF THE DRAWINGS

Fig. 1 is a perspective view, partially broken away, of a tank containing electrolyte for electrophoretic separation.

Fig. 2 is a front view of a gel slab support frame according to one embodiment of the present invention.

Fig. 3 is a sectional view of the gel slab support frame taken along line 3-3 of Fig. 2.

Figs. 4A-B are sectional views of alternate embodiments taken along line 4-4 in Fig. 2; Fig. 4C is a sectional view taken along line 4C-4C in Fig. 2.

Fig. 5A is a perspective view of an arrangement of the gel slab support frame as used in casting the gel slab; Fig. 5B is a sectional view taken along line 5B-5B in Fig. 5A.

Figs. 6A and 6B show a sample pocket forming insert.

Figs. 7A and B illustrates a gel slab support frame in accordance with a further embodiment of the present invention, Fig. 7B being the sectional view taken along line 7B-7B in Fig. 7A.

Fig. 8 is a perspective view of a gel slab support frame in accordance with yet another embodiment of the present invention.

Fig. 9A is a perspective view (underside) of a gel slab with a screen reinforcement support; Fig. 9B is a sectional view taken along line 9B-9B in Fig. 9A.

Fig. 10 is a perspective view, partially broken away, of a rinse tank in accordance with the present invention.

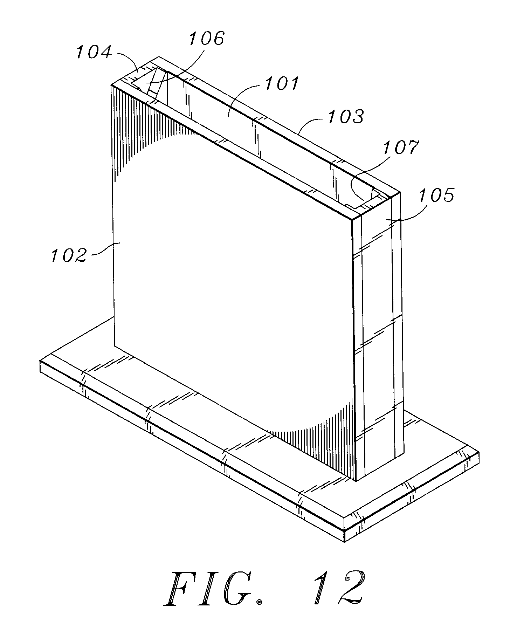

Fig. 11 is a sectional view taken along line 11-11 in Fig. 10.

Fig. 12 is a perspective view of a stain tank in accordance with the present invention.

DESCRIPTION OF THE ILLUSTRATED EMBODIMENTS

The following description is of the best presently contemplated mode of carrying out the invention. This description is made for the purpose of illustrating the general principles of the invention and should not be taken in a limiting sense. The scope of the invention is best determined by reference to the appended claims.

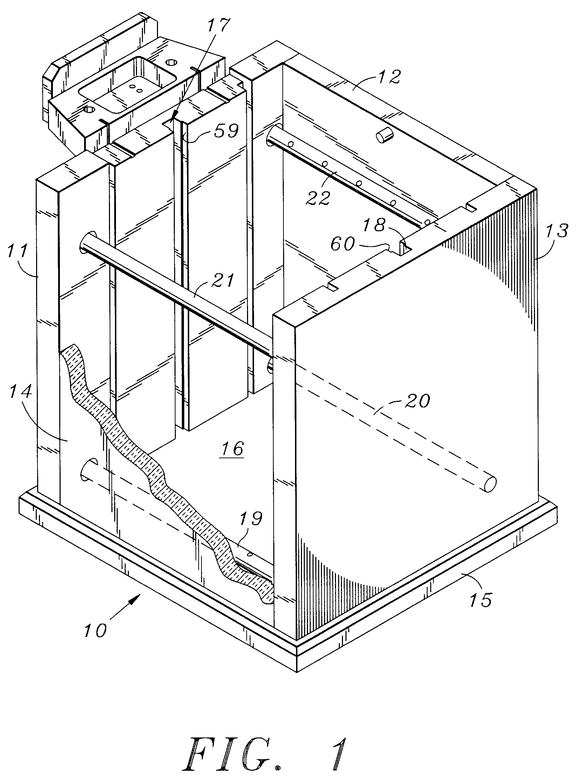

Fig. 1 shows a perspective view of a tank 10 for containing electrolyte for electrophoretic separation using a gel slab. A detailed description of the tank is not necessary for the understanding of the present invention. Hence, only the relevant parts of the tank assembly will be discussed below. U.S. Patent No. 4,740,283 to Laas, et al is incorporated by reference herein. The Laas patent describes a tank assembly which can be easily modified to accommodate the supported gel slab of the present invention.

Referring to Fig. 1, the tank 10 comprises four vertical walls 11, 12, 13 and 14 and a base 15 all made of insulating material such as acrylic or plexiglas defining a compartment 16 for containing electrolyte. On opposing side walls 11 and 13, vertical channels 17 and 18 are provided for accommodating the gel slab support to be described below. The electrolyte is pumped from the bottom of the tank 10 and cooled by an external heat exchanger (not shown) and recirculated back into the tank 10. Two tubes 19 and 20 having holes provided thereon are positioned close to the bottom of the tank 10 for withdrawing the electrolyte and two similar tubes 21 and 22 are provided near the top of the tank 10 for introducing cooled electrolyte.

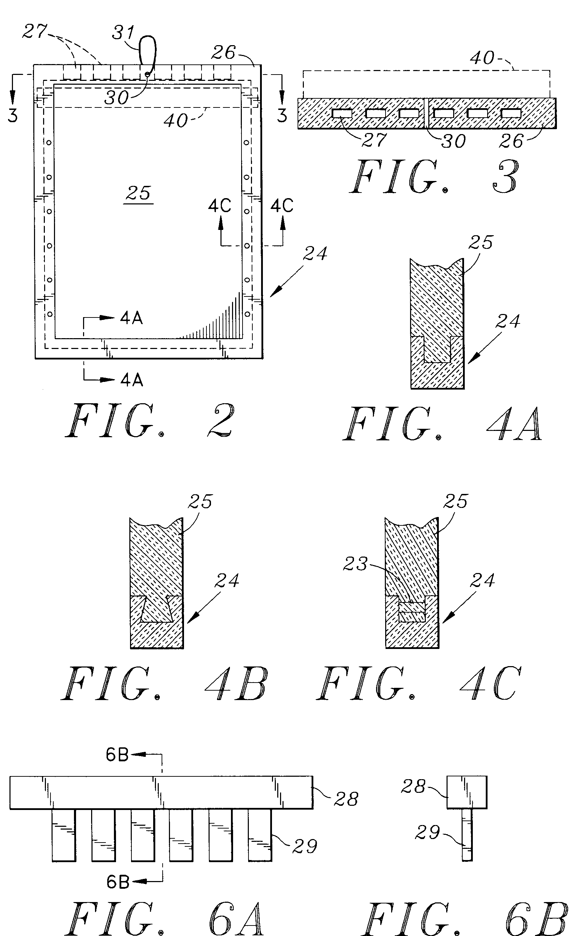

The basic configuration of a support frame 24 for the gel slab 25 in accordance with one embodiment of the present invention is illustrated in Figs. 2-4. It is noted that embodiments described herein in accordance with the present invention provide the related functions of both support and reinforcement of the gel slab. Thus, the terms "support" and "reinforcement" as used herein in reference to the gel slab are so related that one should not be taken to exclude the meaning of the other. The frame 24 is rectangular with width sized to fit across the tank 10 between the channels 17 and 18 and with thickness sized to fit in the channels 17 and 18 so that the channels 17 and 18 support the gel slab 25 and frame 24 upright. The frame 24 is made of insulated material such as acrylic and it can be molded in one piece or assembled from four straight sections which can also be molded or machined. Each straight section has a U-shaped cross section as shown in Fig. 4A for holding the edges of the gel slab 25. Referring to Fig. 4B, the frame sections can be shaped alternatively as shown with a trapezoidal cross-section to interlock the edges of the gel slab 25. In addition, cylindrical posts 23 can be provided extending across the U-shaped section, as shown in Fig. 4C, and at regular spacing along the frame sections to further interlock the edges of the gel slab 25 to prevent accidental dislodging of the gel slab from the frame. The top section 26 of the frame 24 is provided with rectangular slots 27 (Fig. 3) for receiving the teeth 29 of a sample pocket forming insert 28 shown in Figs. 6A and 6B. The use of the insert 28 will become apparent when the process of forming the gel is described below. A hole 30 is provided on the top section 26 for attaching a string 31 for use as a handle for lifting the gel frame 24.

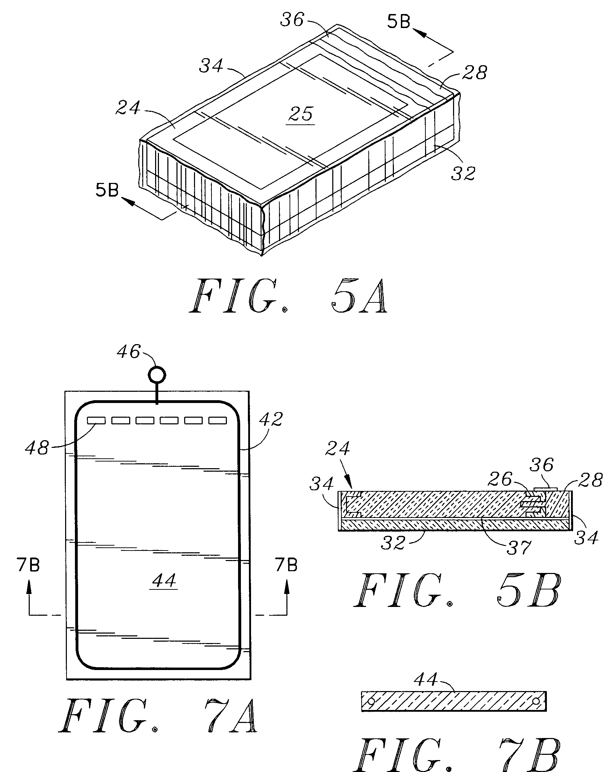

It can be appreciated that the frame 24 can be conveniently utilized as a mold for casting molten agarose gel solution. Specifically, referring to Figs. 5A and B, the frame 24 is placed on its side on a rigid acrylic plate 32. The planar dimensions of the plate 32 and frame 24 are approximately the same. The teeth 29 of a sample pocket forming insert 28 as shown in Fig. 6A and 6B is inserted through the slots 27 in the top section 26 of the frame. Tape 36 is used to join the insert 28 and the section 26. The frame 24, insert 28 and the plate 32 are held together by a tape 34 disposed around the edges of the frame 24, insert 28 and the plate 32 to insure a leak tight structure for molding the gel. Molten agarose solution is then poured into the central space defined by the frame 24. The frame 24 with the solution is placed in a cooling chamber to set the gel into a slab. After the gel slab 25 has set, the sample pocket forming insert 28 is removed. The teeth 29 of the insert 28 define pockets for holding samples for electrophoretic separation. For example, DNA samples are placed in the pockets which are then plugged with molten agarose which is then allowed to set to fully encase the sample in the gel slab 25.

The set gel slab 25 can be separated from the plate 32 by pushing the frame 24 along the plate 32.

It is noted that because the surface of the gel slab 25 is soft, smooth and moist, there is considerable suction between the surface of the gel slab 25 and the smooth surface of the plate 32. It is therefore not advisable to pry the plate 32 off the gel slab 25 as the suction would tear or dislodge the gel slab. To facilitate the separation of the gel slab from the plate 32, an intermediate sheet of material 37 can be placed between the frame 24 and the plate 32 (Fig. 5B) prior to pouring the agarose solution. The sheet 37 should preferably be semi-flexible and smooth. For example, it has been found that an 8-mil thick mylar sheet which is bendable but substantially rigid under its own weight is suitable material for this purpose. The sheet 37 also serves as a gasket for sealing the frame 24 against the plate 32. In addition, a double-sided adhesive tape (not shown) may be disposed between the sheet 37 and the frame 24 to more positively seal the frame against the sheet. After the gel has set, the sheet 37 can be easily lifted from the plate 32 as there is very little suction between the surfaces of the sheet and the plate. The sheet 37 can then be peeled off the gel slab by slightly curling the sheet to break the suction between the sheet and the gel slab. It is understood that the plate 32 can be any rigid flat surface on which gel casting can be carried out with the intermediate sheet 37.

A string or nonconductive wire 31 is threaded through the hole in the top section 26 of the frame 24 which is used as a handle to lift the gel frame 24 with the gel slab 25 set thereon. It is advisable to hold the frame 24 not far from vertical because the gel slab 25 may bow and dislodge from the frame 24 under its own weight if the frame 24 is moved about while it is horizontal on its side and without the side being supported.

Alternatively, the sample pockets can be formed through the planar surface, i.e. the side, of the gel slab 25. In this case, the slots 27 in the top section 26 of the frame 24 is sealed with tape and an insert 40 having a short set of teeth (shorter than the thickness of the gel slab in order not to penetrate the gel slab) is positioned on the planar side of the frame as shown by dotted lines 40 in Figs. 2 and 3. The gel slab 25 can also be formed with the frame 24 standing upright (not shown). In this case the frame 24 is sandwiched between two plates to define a mold for setting the gel slab. The gel agarose solution is poured into the mold through the slots 27 and allowed to set with the pocket forming insert 28 in place.

In accordance with another aspect of the present invention, an internal frame can be utilized to support a gel slab. Referring to Figs. 7A and B, the frame in the form of a loop 42 of nonconductive material is embedded within the gel slab 44 when the slab is cast by conventional means. A handle 46 is made integral with the frame 42 to provide a means of handling the gel slab 44. In this embodiment, since the top section (to which the handle 46 is attached) of the frame 42 is within the top edge of the gel slab 44, the sample pockets 48 should be formed through the planar surface of the gel slab as discussed previously and within the central region surrounded by the frame 42. This is to avoid obstruction of the separation lanes by the top section of the frame 42. The cross-section of the frame sections can be circular or otherwise. The thickness of the frame sections will dictate the space that can be otherwise used for separation which have to be sacrificed for accommodating the frame sections.

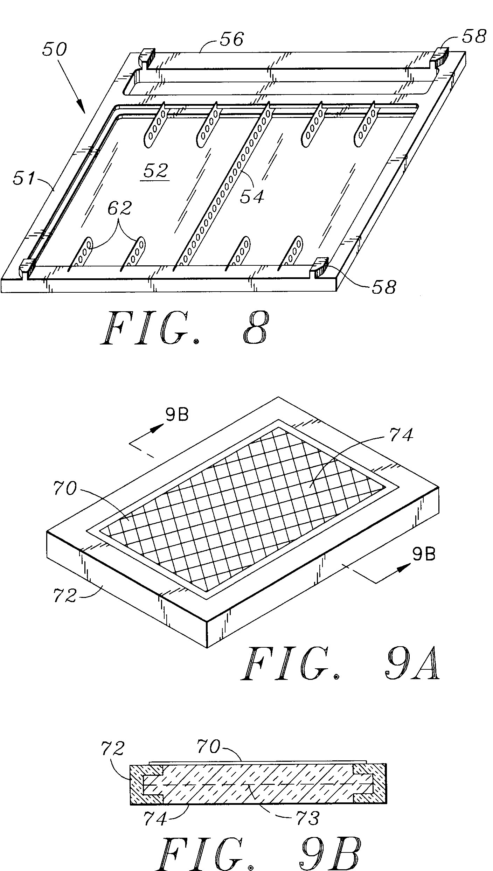

In a further aspect of the present invention, internal and external supports may be combined to form a frame for supporting a gel slab. Referring to Fig. 8, a frame 50 is shown which has a frame structure 51 of U-shaped sections for supporting the edge of a gel slab 52 and a center rib 54 attached across the frame structure 51 for supporting the mid section of the gel slab 52. The frame structure 51 generally is similar to the embodiment shown in Fig. 2 with the exception of several improvements. A handle 56 has been provided integral to the frame structure 51. This makes the frame easier to be manipulated.

During the development of the present invention, it has been found that the frame structure 51 may bind against the channels 17 and 18 when the frame 50 is inserted or lifted out of the tank 10 if there is insufficient clearance between the vertical frame sections and the bottom of the channels. A large clearance is therefore provided between the vertical frame sections and the bottom of the channels. To offset for the large clearance, alignment tabs 58 are provided near the four corners of the frame structure 51 for precise centering of the frame 50 in the tank 10. The frame has to be centered to prevent horizontal movement in its longitudinal direction in order to avoid protrusion of the frame sections above the channels which would otherwise affect the electric field. The alignment tabs 58 can be manufactured to close tolerance for this purpose.

It is seen in Fig. 1 that the channels 17 and 18 each has a wider portion (59, 60) at the top of the respective channel. This provides clearance to accommodate any excess gel that is set on the inner periphery of the frame so as to prevent the channels from scraping the excess gel as the frame is slid along the channels which would otherwise lead to tearing of the gel slab.

The support rib 54 is shown to be a strip of perforated plastic which adds support to the mid section of the gel slab 52 to be cast in the frame. The rib 54 can be a cylindrical rod or wire. Additional support ribs may be provided but with trade off of the number of separation lanes available. For large size gel slabs, it is advisable to have additional support ribs in order to prevent bowing of the gel slab. The additional support ribs can extend completely across the frame like rib 54, or alternatively extend a short length from the top and bottom sections as shown by ribs 62. The short "floating" ribs 62 do not take up separation lanes. For the frame shown in Fig. 8, the sample pockets (not shown) should be formed on the planar surface of the gel slab.

A support frame in the form of a screen can be implemented to reinforce the gel slab 74. Referring to Fig. 9, a nonconductive screen or mesh 70 preferably having open areas of at least 90% can be attached to the frame 72 to support and reinforce one or both planar sides of the gel slab 74. The reinforcing mesh or screen 70 can be permanently or semi-permanently attached to the frame by clamping, gluing or plastic welding. This reinforcement structure can also be embedded into the gel slab at mid-thickness of the gel slab when the gel slab is cast in a mold (see dotted line 73 in Fig. 9B). This can be done by first attaching the screen across the mid-thickness of the mold and then casting the gel slab using the mold. Alternatively, the screen can be laid on the surface of a one-half poured and semi-set gel, followed by pouring of another half of the gel to form a gel slab with built-in screen. It is also possible to simply drop the screen into the poured but not set gel in the mold, allowing the screen to self locate in a random fashion. It will be appreciated that the structural integrity of the gel slab can be improved by using the reinforcement screen alone without using a frame.

Various possible materials can be utilized for the reinforcing screen. Textile screen materials woven from chemically non-reactive polymer monofilaments, for example, polypropylene, polyurethane, polyester, nylon, and kelvar monofilaments are suitable materials. Some inorganic materials such as glass can also be used. Knitted meshes fabricated with exceedingly small diameter filaments can provide open area exceeding 99%. Non-woven textile fabrics of the type prepared from non-reactive polymer slivers by the process known as "needling" in which no binders are used may also be used for the reinforcing screen. Due to the large open area of the screen, it has been found that the screen does not have appreciable effect on the electric fields imposed on the gel slab and on the electrophoretic migration.

A composite reinforcement is contemplated which can improve the strength of the gel slab. It is contemplated that fine materials such as cotton linters or rayon fibers may be mixed into the agarose solution for setting the gel slab. Upon setting, there will be a uniform distribution of the fine materials within the gel slab. The concentration of the material in the gel slab should be small, probably 2-3% by volume, in order not to affect electrophoretic migration through the gel slab.

It can be appreciated from the foregoing description that the gel slab as supported and reinforced in accordance with the present invention can be manipulated with ease. With the added support and reinforcement to the gel slab, a lower concentration of gel medium with acceptable structural integrity can be achieved than is otherwise possible. Accordingly, separation can be achieved in less time due to the less dense gel matrix so formed by lower concentration gel medium.

Moreover, larger gel slabs can be formed which can be conveniently handled without fear of the gel tearing under its own weight. Gel size of approximately 16 x 16 cm have been formed which are twice as wide as those used in the Beckman GeneLine™ system. More samples can be processed at the same time in larger gel slabs thereby improving the throughput of the electrophoretic system.

Instead of setting the gel in the frame prior to use in a laboratory, the gel slab may be preformed and packaged by a manufacturer using for example an electrophoretic gel container disclosed and described in U.S. Patent No. 4,314,897 to Monte et al which has been assigned to the assignee of the present invention. This will add to the convenience of the end user. In addition, the frame can be packaged with a rehydratable gel instead of a preformed gel. Just prior to use, a buffer solution can be poured into the central space defined by the frame to rehydrate the gel compounds to form a gel slab. A rehydratable gel formulation has been disclosed in U.S. Patent No. 4,746,551 to Allen et al.

Although the support frame of the present invention has been described in connection with vertically supporting a gel slab for electrophoretic separation, it is to be understood that the frame can also be used in systems where the gel slab is laid horizontally on its planar surface in an electrolyte tank. The handles should probably be modified to allow the gel slab and frame to be lifted conveniently from the electrolyte tank. Furthermore, it is contemplated that a gel slab may be cast by a conventional method without using the support frame of the present invention, which is then loaded into a gel slab support frame by sliding the edges of the gel slab along the U-shaped frame sections. Various modifications and combinations of the above-described features are within the scope of the present invention and is covered by the claims.

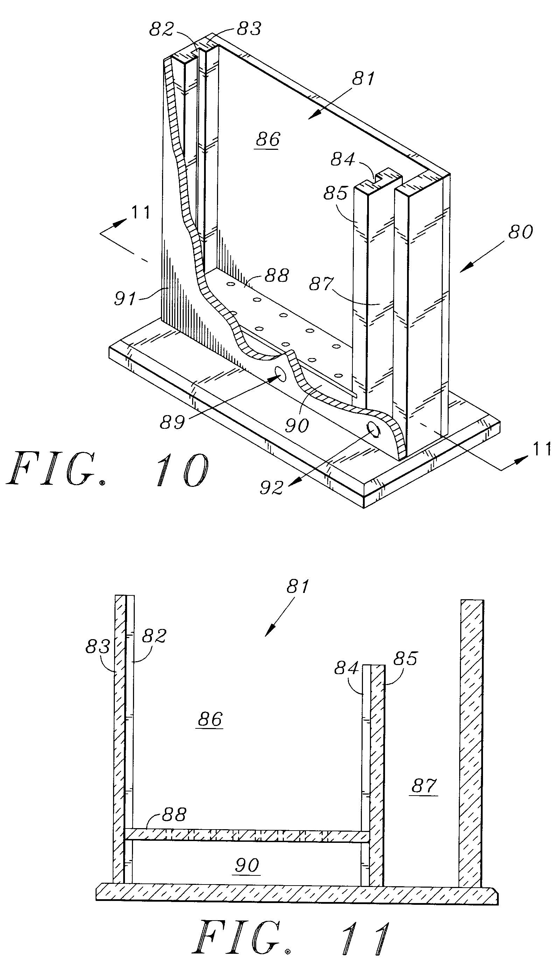

The convenience of the support and handling of the gel slab provided by the present invention can be further appreciated in the way the electrophoretic separation process is being carried out in the laboratory. In particular, the rinsing and staining operations can be carried out conveniently and efficiently. Referring to Fig. 10, a rinse tank 80 according to one embodiment of the present invention is shown which can be used to rinse the gel slab to remove residual electrolyte or staining solution. The rinse tank 80 defines a vertical compartment 81 which is slightly wider than the thickness of the gel slab and frame. A partition wall 85 divides the compartment 81 into a rinse chamber 86 and an overflow chamber 87. A channel 82 is provided at one end wall 83 of the rinse tank 80 and an opposing channel 84 is provided along the vertical wall partition 85. The distance defined between the channels 82 and 84 is sized such that a gel frame or otherwise reinforced gel slab as previously described can be received loosely with the vertical edges supported in the channels. (The description hereinafter will refer to a gel slab supported by an external frame, but it is to be understood that the discussion applies also to internally supported or reinforced gel slabs.) The height of the partition wall 85 is sized to extend at least as high as the gel slab when the gel slab rests in the rinse tank. Near the base of the rinse chamber 86, a perforated plate 88 is provided on which the gel slab frame can rest. An inlet port 89 is provided on the wall 91 of the rinse tank for pumping rinse fluid such as water into the space 90 below the perforated plate 88. An outlet port 92 is provided on the wall 91 for draining fluid from the overflow chamber 87.

In operation, a gel slab supported by a gel frame is inserted into the rinse chamber 86 and it rests on the middle non-perforated portion of the perforated plate 88. A rinsing fluid such as water is pumped into the space 90 below the perforated plate 88. The fluid rises in the rinse chamber 87 through the perforated plate 88 until the fluid level reaches the highest point of the partition wall 85. Thereafter, continuous pumping of rinsing fluid will cause the fluid to overflow into the overflow chamber 87 which is drained through the outlet port 92. Depending on the circulation flow rate desired, draining may be assisted by a pump. Thus, it can be seen that the surfaces of the gel slab are rinsed by fluid rising from the bottom of the rinse chamber 86 and draining into the overflow chamber 87. Rinsing is desirable for example at the end of the staining process to remove residual staining solution to prepare the gel slab for sample component visualization by fluorescence detection.

In connection with the supported gel slab, in another aspect of the present invention, a stain tank is provided which conveniently accommodates the gel slab and its support frame (or an otherwise supported or reinforced gel slab) for staining for example a fluorescence agent prior to fluorescence detection. Referring to Fig. 12, the stain tank 100 has a staining chamber 101 defined by two walls 102 and 107 approximately the planar area of the gel slab and two end walls 104 and 105 with width slightly exceeding the width of the gel slab. The end walls 104 and 105 are provided with channels 106 and 107 and are spaced apart to loosely receive a gel support frame. The channels are beveled near the top of the tank 100 for guiding the gel slab into the channels.

In operation, the stain tank 100 is filled with staining solution to a level such that when the gel slab and its support frame is inserted into the stain tank the staining solution is displaced to reach a level that will completely submerge the gel slab. After an appropriate time, the stained gel slab is then removed by pulling the frame out of the stain tank. This can be followed by a rinsing step using the rinse tank 80.

The rinse tank 80 can also be used as a stain tank by simply closing the inlet and outlet ports 89 and 90 and filling the rinse chamber 86 with staining solution from the top opening of the rinse tank 80. Alternatively, the staining solution can be introduced into the rinse tank 80 through the inlet port 89. If it becomes necessary to circulate the staining solution, the staining solution can be continuously pumped through the inlet port 89, circulated in the rinse chamber 86, drained from the overflow chamber 87 through the outlet port 92, and pumped back into the tank. Although not shown in Fig. 10, the input to the inlet port 89 can be simply switched by a mechanism (not shown) to alternatively access rinsing solution and staining solution in a predetermined automated sequence depending on the particular application. Thus, a single tank can be conveniently used for staining and rinsing operations.

It can be appreciated that since the gel slab is handled by its support, it is no longer necessary for the user to dip his or her hands into any of the electrolyte, rinsing and staining solutions. This avoids contaminating the user's hands for subsequent handling of the gel slab and surrounding equipment in the laboratory. Also, since it would not be necessary to provide space to accommodate the user's hands, the electrophoretic tank, rinse tank and stain tank can have a small volumetric capacity so as to conserve the respective solutions used in the tanks. In the case of the rinse tank, the rinsing operation is more effective since the layer of fluid immediately adjacent the surface of the gel slab is being circulated which is more difficult to accomplish in a large tank with side walls spaced relatively far from the gel slab.

While the invention has been described with respect to the illustrated embodiments in accordance therewith, it will be apparent to those skilled in the art that various modifications and improvements may be made without departing from the scope and spirit of the invention. Accordingly, it is to be understood that the invention is not to be limited by the specific illustrated embodiments but only by the scope of the appended claims.

**Claims**

1. A support for an electrophoretic gel slab (25; 44; 52; 74) comprising a frame (24; 42; 50; 72) supporting the gel slab to allow the gel slab to be handled by handling the frame.

2. A gel slab support as in claim 1 wherein the frame comprises external means (24; 51; 72, 70) for supporting the periphery of the gel slab externally.

3. A gel slab support as in claim 2 wherein the external means comprises a frame section (24; 51; 72) having a groove for accommodating the periphery of the gel slab.

4. A gel slab support as in claim 3 wherein the frame section (24) has cylindrical posts (23) extending across the groove of the frame section and spaced along the groove.

5. A gel slab support as in claim 3 wherein the frame section (24; 51; 72) has U-shaped cross-section.

6. A gel slab support as in claim 3 wherein the groove of the frame section (24) has trapezoidal cross-section.

7. A gel slab support as in claim 2 wherein the external means (72) comprises a screen (70) having a large open area for supporting a planar surface of the gel slab.

8. A gel slab support as in claim 1 wherein the frame (42; 51) comprises means (42; 54, 62; 73) for supporting the gel slab internally.

9. A gel slab support as in claim 8 wherein the means for supporting comprises a loop (42) of non-conductive material embedded in the gel slab near the periphery of the gel slab.

10. A gel slab support as in claim 8 wherein the means for supporting comprises a screen (73) having a large open area to be embedded in the gel slab for internally supporting the gel slab (74).

11. A gel slab support as in claim 1 wherein the frame (50) comprises structural means (51, 54, 62) for externally supporting the periphery of the gel slab (52) and internally supporting the gel slab to reduce bowing.

12. A gel slab support as in claim 11 wherein the structural means comprises a frame section (51) for supporting the periphery of the gel slab and a rib (54, 62) extending from the frame section for internally supporting the gel slab.

13. A gel slab support as in claim 12 wherein the rib (62) extends a short distance from the frame section.

14. A gel slab support as in claim 12 wherein the rib (54) extends across the gel slab.

15. A gel slab support as in claim 14 wherein the structural means further comprises at least one rib (62) which extends a short distance from the frame section.

16. A gel slab support as in claim 12 wherein the rib (54, 62) is a perforated strip of material.

17. A gel slab support as in claim 11 wherein the structural means comprises:

frame sections (51) which define a space for accommodating a gel slab (52), the frame sections having grooves for accommodating the periphery of the gel slab; and

a strip of material (54) extending across the space defined by the frame sections for internal support of the gel slab.

**18.** A gel slab support as in claim 17 wherein the strip of material (54) is perforated.

**19.** A gel slab support as in claim 18 wherein the structural means further comprises one or more ribs (62) extending from the frame sections into the space defined by the frame sections.

**20.** A gel slab support as in claim 19 wherein the structural means further comprises alignment tabs (58) at the ends of two opposing frame sections for alignment of the gel slab support in an electrophoretic tank.

**21.** A gel slab support as in claim 1 wherein the frame comprises:

a frame section (72) for supporting the periphery of the gel slab (74); and

a sheet of screen material (70, 73) attached to the frame section for supporting the gel slab.

**22.** A gel slab support as in claim 21 wherein the screen (70) externally supports a planar surface of the gel slab.

**23.** A gel slab support as in claim 22 wherein the screen (73) internally supports the gel slab.

**25.** A gel slab support as in claim 24 wherein the screen (73) has at least 90% open area.

**26.** An electrophoretic gel slab comprising:

a slab of gel (25; 44; 52; 74) suitable for electrophoretic separation; and

reinforcement means (24; 42; 50, 51, 54, 62; 70, 72, 73) for reinforcing the slab for improving structural integrity.

**27.** A gel slab as in claim 26 wherein the reinforcement means comprises a sheet (73) of screen material cast within the slab.

**28.** A gel slab as in claim 26 wherein the reinforcement means comprises a sheet (70) of screen material disposed against a planar surface of the slab to support the slab.

**29.** A gel slab as in claim 26 wherein the reinforcement means comprises a frame (24; 42; 50; 72).

**30.** A gel slab as in claim 29 wherein the frame (24; 50; 72) externally supports the periphery region of the slab.

**31.** A gel slab as in claim 29 wherein the frame (42) internally supports the slab.

**32.** A gel slab as in claim 29 wherein the frame (50) supports the slab internally and externally.

**33.** A gel slab as in claim 30 wherein the frame (24; 50; 72) has grooved sections for supporting the periphery of the slab.

**34.** A gel slab as in claim 30 wherein the reinforcement means further comprises a reinforcing screen (70, 73).

**35.** A rinse tank (80) for an electrophoretic gel slab comprising:

a rinse chamber (86) having support means (83, 85) for vertically supporting a gel slab;

means (89) for introducing rinse solution into the rinse chamber; and

means (92) for withdrawing rinse solution from the rinse chamber.

**36.** A rinse tank as in claim 35 wherein the means for withdrawing rinse solution comprises:

an overflow chamber (87) separated from the rinse chamber by a vertical partition (85), the overflow chamber being for collecting rinse solution overflowing over the partition from the rinse chamber; and

draining means (92) for draining the rinse solution in the overflow tank.

**37.** A rinse tank as in claim 36 wherein the rinse chamber has a horizontal perforated plate (88) defining a space (90) at the bottom of the rinse chamber, the rinse solution being introduced into the rinse chamber via said space and through the perforated plate.

**38.** A rinse tank as in claim 37 wherein the support means comprises structures having vertical channels (82, 84) provided for receiving the periphery of the gel slab.

**39.** A stain tank (100) for an electrophoretic gel slab comprising:

a chamber (101) having support means (104, 105) for vertically supporting a gel slab.

**40.** A stain tank as in claim 39 wherein the support means comprises structures with vertical channels (106, 107) facing the interior of the chamber for receiving the periphery of the gel slab so as to vertically support the gel slab.

**41.** A method for supporting an electrophoretic gel slab comprising the step of providing a sheet of screen material (70, 73) for support of the gel slab.

**42.** A method as in claim 41 wherein the sheet (73) is disposed inside the gel slab when the latter is being cast.

**43.** A method as in claim 42 further comprising the step of providing a frame (72) for supporting the periphery region of the gel slab.

**44.** A method for supporting an electrophoretic gel slab comprising the step of providing a frame (24; 42; 50; 72) supporting the periphery region of the gel slab.

FIG. 1

FIG. 2

FIG. 3

FIG. 4A

FIG. 4B

FIG. 4C

FIG. 6A

FIG. 6B

FIG. 5A

FIG. 5B

FIG. 7A

FIG. 7B

11

EP 0 476 890 A2

FIG. 8

FIG. 9A

FIG. 9B

FIG. 10

FIG. 11

*FIG. 12*